# EUROPÄISCHE PATENTANMELDUNG

(11) **EP 2 071 288 A1**
(43) Veröffentlichungstag der Anmeldung: **17.06.2009**
(21) Anmeldenummer: 08105565.9
(22) Anmeldetag: 14.10.2008
(51) Int. Cl.: G01C 21/36, G01C 21/32, G06F 3/048

(54) **Verfahren zur auswahl eines darstellungsbereiches aus einer zweidimensionalen kartendarstellung**

(30) Priorität: 13.12.2007 DE 102007060055
(71) Anmelder: ROBERT BOSCH GMBH, 70442 Stuttgart (DE)
(72) Erfinder: Vogel, Peter, 31139, Hildesheim (DE); Wildschuette, Florian, 31139, Hildesheim (DE)

(57) **Zusammenfassung**

Die Erfindung betrifft ein Verfahren zur Auswahl eines Darstellungsbereiches 1, ..., 9, 11, 12, 13 aus einer zweidimensionalen Kartendarstellung 100, wobei in der Kartendarstellung 100 eine Fahrtroute 20 dargestellt wird, wobei die zweidimensionale Kartendarstellung 1000 in Darstellungsbereiche 1, ..., 9, 11, 12, 13 unterteilt wird, wobei die Darstellungsbereiche 1, ..., 9, 11, 12, 13 in Abhängigkeit von der Fahrtroute 20 in eine erste Menge und in eine zweite Menge von Darstellungsbereichen 1, ..., 9, 11, 12, 13 aufgeteilt werden, dadurch gekennzeichnet, dass in einem Betriebsmodus eine Auswahl eines Darstellungsbereiches 1, ..., 9, 11, 12, 13 durch einen Nutzer auf eine Auswahl aus der ersten Menge von Darstellungsbereichen 2, 5, 6, 9, 11, 12, 13 beschränkt ist.

## Beschreibung

### Stand der Technik

Die Erfindung geht aus von einem Verfahren und einer Fahrerinformationseinrichtung nach Gattung der unabhängigen Ansprüche.

Aus der DE 100 16 674 A1 ist bereits eine Navigationsvorrichtung bekannt, bei welcher eine Fahrzeugposition ermittelt wird und in Abhängigkeit der ermittelten Fahrzeugposition ein Kartenausschnitt einer Karte ermittelt wird, welcher dann von einer Ausgabeeinheit angezeigt wird. Ferner ist es bekannt, einer Fahrerinformation eine Maßstabsordnung zuzuweisen, so dass ein Maßstab eines Kartenausschnitts in Abhängigkeit der Maßstabsordnung gewählt wird.

### Offenbarung der Erfindung

Vorteile der Erfindung

Das erfindungsgemäße Verfahren mit den Merkmalen des unabhängigen Anspruchs zur Auswahl eines Darstellungsbereiches aus einer zweidimensionalen Kartendarstellung, weist demgegenüber den Vorteil auf, dass in einem Betriebsmodus eine Auswahl eines Darstellungsbereiches durch einen Nutzer auf eine Auswahl aus einer ersten Menge von Darstellungsbereichen beschränkt ist. Dies ist vorteilhaft, da eine Auswahl eines Darstellungsbereiches durch einen Nutzer auf eine erste Menge von Darstellungsbereichen beschränkt ist, welche für den Nutzer besondere Relevanz aufweisen.

Durch die in den abhängigen Ansprüchen aufgeführten Maßnahmen sind vorteilhafte Weiterbildungen und Verbesserungen des im unabhängigen Anspruchs angegebenen Verfahrens möglich.

Vorteilhafterweise handelt es sich bei der Unterteilung der zweidimensionalen Kartendarstellung in Darstellungsbereiche um eine Kachelung. Dieses ist vorteilhaft, da bei einer Unterteilung der zweidimensionalen Kartendarstellung in mindestens zwei Kacheln, welches wiederum zweidimensionale Darstellungsbereiche sind, jeder Punkt der zweidimensionalen Kartendarstellung genau einer Kachel zugeordnet wird.

Vorteilhafterweise wird die Auswahl eines Darstellungsbereiches dem Nutzer durch eine erste grafische Kennzeichnung angezeigt. Dieses ist vorteilhaft, da der Nutzer durch die erste grafische Kennzeichnung darüber informiert wird, welcher Darstellungsbereich von ihm aktuell ausgewählt ist.

Vorteilhafterweise handelt es sich bei Darstellungsbereichen der ersten Menge um Darstellungsbereiche, welche eine Darstellung der Fahrtroute beinhalten. Dieses ist vorteilhaft, da es sich bei Darstellungsbereichen, welche eine Darstellung einer Fahrtroute beinhalten, um Darstellungsbereiche handelt, welche bezüglich ihres Informationsgehaltes eine höhere Relevanz für den Nutzer besitzen, als Darstellungsbereiche, welche keine Darstellung der Fahrtroute beinhalten.

Vorteilhafterweise handelt es sich bei Darstellungsbereichen der ersten Menge um Darstellungsbereiche, anhand derer ein Symbol entlang der Fahrtroute dargestellt wird. Dieses ist vorteilhaft, da anhand von Symbolen entlang der Fahrtroute Informationen hinterlegt werden können, welche den Fahrer auf besondere Gegebenheiten entlang der Fahrtroute aufmerksam machen.

Vorteilhafterweise erfolgt die Auswahl durch den Nutzer anhand einer Richtungsangabe in einer der Richtungen unten, oben, rechts und links. Dieses ist vorteilhaft, da es für Nutzer von Fahrerinformationseinrichtungen eine übliche Handlung ist, anhand solcher Richtungsangaben eine Auswahl von Darstellungsbereichen auf einer zweidimensionalen Kartendarstellung durchzuführen.

Vorteilhafterweise werden Darstellungsbereiche der ersten Menge durch eine zweite grafische Kennzeichnung unterschiedlich zu Darstellungsbereichen der zweiten Menge angezeigt. Dieses ist vorteilhaft, da durch die zweite grafische Kennzeichnung der Fahrer auf die Darstellungsbereiche der ersten Menge, auf welche eine Auswahl im Darstellungsbereich beschränkt ist, aufmerksam gemacht wird, so dass er auf einfache Weise assoziieren kann, welche Darstellungsbereiche für ihn auswählbar sind.

Vorteilhafterweise nimmt der Nutzer durch eine Eingabe eine Bestätigung der Auswahl eines Darstellungsbereiches vor, so dass aufgrund der Bestätigung dem Nutzer Informationen angezeigt werden, welche mit dem ausgewählten Darstellungsbereich verknüpft sind. Dieses ist vorteilhaft, da der Nutzer durch die Bestätigung der Auswahl eines Darstellungsbereiches weitere Informationen angezeigt bekommt, welche im Zuge der Anzeige der zweidimensionalen Kartendarstellung zuvor nicht dargestellt wurden.

Vorteilhafterweise handelt es sich bei den Informationen um eine vergrößerte Darstellung des ausgewählten Darstellungsbereiches. Dieses ist vorteilhaft, da der Nutzer somit einen Kartenausschnitt der zweidimensionalen Kartendarstellung auswählen kann, um diesen vergrößert und somit besser sichtbar dargestellt zu bekommen.

Gemäß eines nebengeordneten, unabhängigen Patentanspruchs wird eine Fahrerinformationseinrichtung beansprucht. Diese Fahrerinformationseinrichtung weist auf eine Anzeigeeinheit, welche eine Anzeige einer zweidimensionalen Kartendarstellung derart vornimmt, dass die zweidimensionale Kartendarstellung in Darstellungsbereiche unterteilt ist, wobei die Anzeigeeinheit die Darstellungsbereiche in Abhängigkeit von der Fahrtroute in eine erste Menge und in eine zweite Menge von Darstellungsbereichen aufteilt, eine Bedieneinrichtung zur Auswahl eines Darstellungsbereiches aus der zweidimensionalen Kartendarstellung durch einen Nutzer, wobei die Anzeigeeinheit eine erste Schnittstelle aufweist, über welche sie an einen Datenbus angeschlossen ist, wobei die Bedieneinheit eine zweite Schnittstelle aufweist, über welche sie an den Datenbus angeschlossen ist, **dadurch gekennzeichnet, dass** in einem Betriebsmodus die Auswahl eines Darstellungsbereiches durch den Nutzer auf eine Auswahl aus der ersten Menge von Darstellungsbereichen beschränkt ist.

Gemäß eines abhängigen Anspruchs ist die Fahrerinformationseinrichtung **dadurch gekennzeichnet, dass** die Bedieneinrichtung, eine Kreuzwippe, ein Tastenfeld, einen Trackball oder einen Joystick aufweist. Dieses ist vorteilhaft, da Nutzer von Fahrerinformationseinrichtungen es gewohnt sind, Eingaben anhand solcher Bedienelemente einer Bedieneinrichtung vorzunehmen.

Die Fahrerinformationseinrichtung weist die Vorteile des erfindungsgemäßen Verfahrens auf.

### Kurze Beschreibung der Zeichnungen

Ausführungsbeispiele der Erfindung sind in den Zeichnungen dargestellt und in der nachfolgenden Beschreibung näher erläutert.

Figur 1 zeigt eine zweidimensionale Kartendarstellung, welche in unterschiedliche Darstellungsbereiche unterteilt ist, gemäß einer Ausführungsform der Erfindung.

Figur 2a zeigte eine zweidimensionale Kartendarstellung, bei welcher ein ausgewählter Darstellungsbereich grafisch gekennzeichnet ist.

Figur 2n zeigt eine zweidimensionale Kartendarstellung, bei welcher unterschiedliche Darstellungsbereiche durch den Nutzer ausgewählt und daher grafisch gekennzeichnet sind.

Figur 3 zeigt eine zweidimensionale Kartendarstellung, bei welcher Darstellungsbereiche der ersten Menge zusammen mit einer zweiten grafischen Kennzeichnung angezeigt werden.

Figur 4 zeigt eine zweidimensionale Kartendarstellung, bei welcher es sich bei Darstellungsbereichen der ersten Menge um Darstellungsbereiche handelt, anhand derer ein Symbol entlang der Fahrtroute dargestellt wird.

Figur 5a, 5b zeigen zweidimensionale Kartendarstellungen, bei welchen Darstellungsbereiche, in Form von Symbolen entlang der Fahrtroute, welche durch den Nutzer ausgewählt werden, grafisch gekennzeichnet angezeigt werden.

Figur 6 zeigt Informationen, welche dem Nutzer aufgrund einer Bestätigung angezeigt werden, und welche mit dem ausgewählten Darstellungsbereich verknüpft sind.

Figur 7a, 7b zeigen einen Vorgang einer Auswahl eines Darstellungsbereiches aus einer zweidimensionalen Kartendarstellung sowie eine vergrößerte Darstellung des ausgewählten Darstellungsbereiches.

Figur 8a, 8b, 8c zeigen jeweils eine Fahrerinformationseinrichtung gemäß unterschiedlicher Ausführungsbeispiele der Erfindung.

### Ausführungsformen der Erfindung

Bekannt sind Verfahren, bei welchen zweidimensionale Kartendarstellungen eine Darstellung einer Fahrtroute beinhalten. Ebenso ist es bekannt, die zweidimensionale Kartendarstellung in Darstellungsbereiche zu unterteilen. Erfindungsgemäß werden die Darstellungsbereiche der zweidimensionalen Kartendarstellung in Abhängigkeit von der Fahrtroute in eine erste Menge und in eine zweite Menge von Darstellungsbereichen aufgeteilt. Das erfindungsgemäße Verfahren ist dadurch gekennzeichnet, dass in einem Betriebsmodus eine Auswahl eines Darstellungsbereiches durch einen Nutzer auf eine Auswahl aus der ersten Menge von Darstellungsbereichen beschränkt ist. Durch eine solche Beschränkung ergibt sich der Vorteil, dass ein Nutzer nur solche Darstellungsbereiche auswählen kann, welche für ihn besondere Relevanz besitzen.

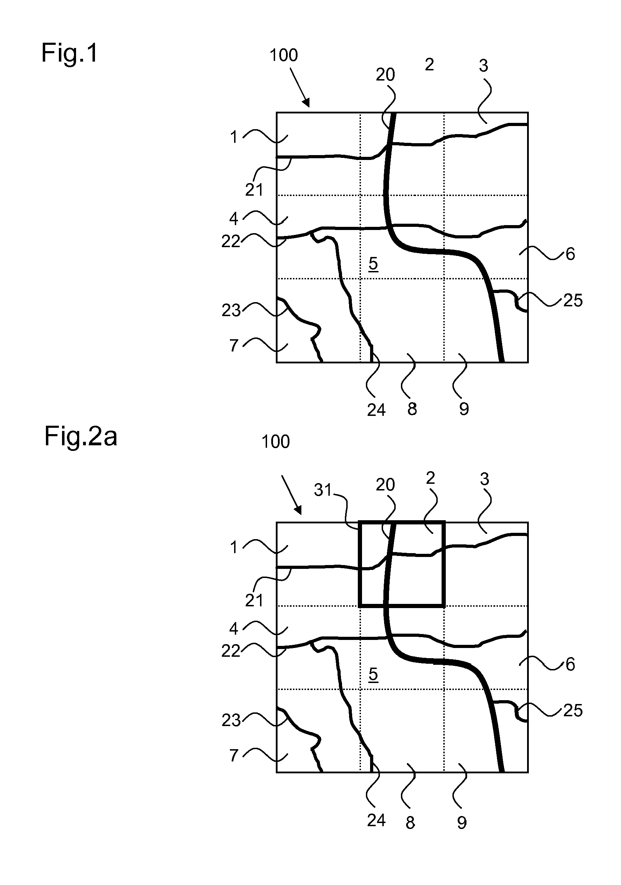

Ein Ausführungsbeispiel zu einer zweidimensionalen Kartendarstellung ist in Figur 1 dargestellt. Die Figur 1 zeigt eine zweidimensionale Kartendarstellung 100, welche eine Darstellung einer Fahrtroute 20 beinhaltet. Gemäß des Ausführungsbeispieles ist die zweidimensionale Kartendarstellung 100 in neun Darstellungsbereiche 1,..., 9 unterteilt. Die zweidimensionale Kartendarstellung 100 weist gemäß des Ausführungsbeispieles vorzugsweise eine Form eines Quadrats auf. Die neun Darstellungsbereiche 1 bis 9 weisen ebenfalls jeweils die Form eines Quadrats auf. Gemäß des Ausführungsbeispieles handelt es sich bei der Unterteilung der zweidimensionalen Kartendarstellung 100 um eine Kachelung, weshalb die zweidimensionale Kartendarstellung 100 sich in drei untereinander liegende Zeilen zu je drei Darstellungsbereichen aufteilt. In der obersten Zeile befinden sich von links nach rechts gehend die ersten drei Darstellungsbereiche 1 bis 3. In der mittleren Zeile befinden sich von links nach rechts gehend die Darstellungsbereiche 4 bis 6. In der untersten Zeile befinden sich die Darstellungsbereiche 7 bis 9. Eine Kachelung im mathematischen Sinne ist eine Unterteilung einer zweidimensionalen Ebene in Teilbereiche, auch Kacheln genannt, wobei jeder Punkt der zweidimensionalen Ebene zu mindestens einer Kachel gehört. Kein Punkt der Ebene liegt im Inneren von zwei oder mehr Kacheln. Ferner haben verschiedene Kacheln höchstens Randpunkte gemeinsam.

Gemäß des Ausführungsbeispieles werden die neun Darstellungsbereiche 1 bis 9 voneinander durch gestrichelte Linien getrennt dargestellt.

Gemäß des Ausführungsbeispieles weist die zweidimensionale Kartendarstellung 100 eine Fahrtroute 20 auf, welche entlang des zweiten Darstellungsbereiches 2, des fünften Darstellungsbereiches 5, des sechsten Darstellungsbereiches 6 sowie des neunten Darstellungsbereiches 9 verläuft. Ferner verläuft entlang des ersten Darstellungsbereiches 1 hin zum zweiten Darstellungsbereich 2 und dann weiter zum dritten Darstellungsbereich 3 eine Wegeroute 21. Es verläuft entlang des vierten Darstellungsbereiches 4 zum fünften Darstellungsbereich 5 und dann weiter zum sechsten Darstellungsbereich 6 eine zweite Wegeroute 22, welche im fünften Darstellungsbereich 5 die Fahrtroute 20 kreuzt. In dem vierten Darstellungsbereich 4 zweigt von der zweiten Wegeroute 22 eine vierte Wegeroute 24 ab, welche von dem vierten Darstellungsbereich 4 hin zu dem siebten Darstellungsbereich 7 und dann weiter zu dem achten Darstellungsbereich 8 verläuft. Ferner verläuft eine dritte Wegeroute 23 durch den siebten Darstellungsbereich 7, ohne eine andere Wegeroute zu kreuzen. Es verläuft in dem neunten Darstellungsbereich 9 eine fünfte Wegeroute 25 abzweigend von der Fahrtroute 20 hin zum rechten Rand des neunten Darstellungsbereich 9.

Gemäß des Ausführungsbeispieles werden die Darstellungsbereiche 1 bis 9 in Abhängigkeit von der Fahrroute 20 in eine erste Menge und in eine zweite Menge von Darstellungsbereichen aufgeteilt. Diese Aufteilung erfolgt vorzugsweise derart, dass jene Darstellungsbereiche, durch welche die Fahrtroute 20 verläuft, die erste Menge der Darstellungsbereiche bildet. Gemäß des Ausführungsbeispieles handelt es sich also bei den ersten Darstellungsbereichen der ersten Menge und den zweiten Darstellungsbereich 2, den fünften Darstellungsbereich 5, den sechsten Darstellungsbereich 6 sowie den neunten Darstellungsbereich 9. Alle weiteren Darstellungsbereiche stellen gemäß des Ausführungsbeispieles die zweite Menge von Darstellungsbereichen dar.

Erfindungsgemäß ist in einem Betriebesmodus die Auswahl eines Darstellungsbereiches durch einen Nutzer auf eine Auswahl der ersten Menge von Darstellungsbereichen beschränkt. Gemäß des Ausführungsbeispieles ist die Auswahl eines Darstellungsbereiches in einem Betriebsmodus durch einen Nutzer also auf eine Auswahl des zweiten Darstellungsbereiches 2, des fünften Darstellungsbereiches 5, des sechsten Darstellungsbereiches 6 oder des neunten Darstellungsbereiches 9 beschränkt.

Vorzugsweise wird die Auswahl eines Darstellungsbereiches dem Nutzer durch eine erste grafische Kennzeichnung angezeigt. Hierzu findet sich ein Ausführungsbeispiel in Figur 2a.

Figur 2a zeigt die zweidimensionale Kartendarstellung 100 zusammen mit allen weiteren Darstellungselementen, wie bereits gemäß Figur 1 erläutert. Zusätzlich weist Figur 2a eine grafische Kennzeichnung des zweiten Darstellungsbereiches 2 in Form eines rechteckförmigen Rahmens 31 auf. Dieser Rahmen 31 zeigt gemäß des Ausführungsbeispieles dem Nutzer an, dass der zweite Darstellungsbereich 2 ausgewählt ist. Die erste grafische Kennzeichnung des ausgewählten Darstellungsbereiches erfolgt vorzugsweise durch einen rechteckförmigen Rahmen 31. Weitere Formen einer grafischen Kennzeichnung eines Darstellungsbereiches sind denkbar. Beispielsweise ist es möglich, die erste grafische Kennzeichnung eines ausgewählten Darstellungsbereiches dadurch vorzunehmen, dass der ausgewählte Darstellungsbereich heller dargestellt wird als nicht ausgewählte Darstellungsbereiche. Ferner ist es möglich, dass ein ausgewählter Darstellungsbereich 2 mit einer höheren Fahrtintensität dargestellt wird als nicht ausgewählte Darstellungsbereiche.

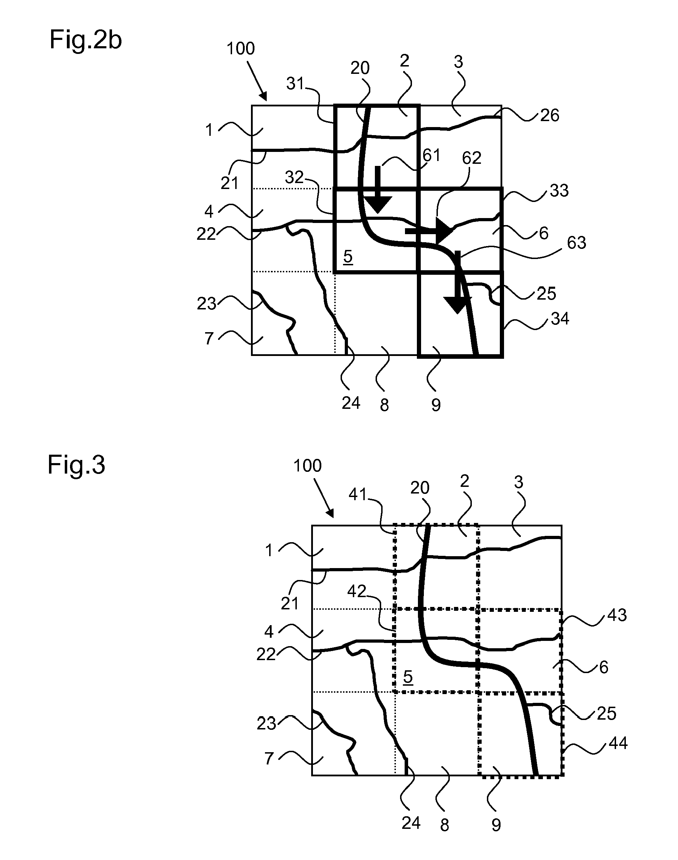

Vorzugsweise erfolgt die Auswahl eines Darstellungsbereiches durch den Nutzer anhand einer Richtungsangabe in eine der Richtungen unten, oben, recht und/oder links. Hierzu ist ein Ausführungsbeispiel in Figur 2b dargestellt. Figur 2b beinhaltet alle Darstellungselemente, welche bereits in Figur 1 dargestellt sind. Weitere Darstellungselemente aus Figur 2b werden im Folgenden näher erläutert. Zu einem ersten Zeitpunkt wird gemäß des Ausführungsbeispiels der zweite Darstellungsbereich 2 ausgewählt, welches durch eine Umrandung 31 des zweiten Darstellungsbereiches 2 angezeigt wird. Aufgrund einer Richtungsangabe durch den Nutzer in Form einer Richtung nach unten erfolgt eine Auswahl des fünften Darstellungsbereiches 5 zu einem zweiten Zeitpunkt. Der Wechsel der Auswahl eines Darstellungsbereiches von dem zweiten Darstellungsbereich 2 zu dem fünften Darstellungsbereich 5 wird gemäß Figur 2b durch einen Pfeil 61 symbolisiert, welcher von dem zweiten Darstellungsbereich 2 zu dem fünften Darstellungsbereich 5 zeigt. Ist der fünfte Darstellungsbereich 5 ausgewählt, und erfolgt eine weitere Richtungsangabe in der Richtung nach unten, so erfolgt gemäß des Ausführungsbeispieles keine Auswahl des achten Darstellungsbereiches 8, welcher sich direkt unterhalb des fünften Darstellungsbereiches 5 befindet. Eine Auswahl des achten Darstellungsbereiches 8 ist ausgeschlossen, da gemäß des Ausführungsbeispieles der achte Darstellungsbereich 8 nicht der ersten Menge von Darstellungsbereichen angehört.

Aufgrund entweder der Richtungsangabe in der Richtung nach unten oder der Richtungsangabe der Richtung nach rechts ist es möglich, dass gemäß des Ausführungsbeispieles der Nutzer die Auswahl von dem fünften Darstellungsbereich 5 zu dem sechsten Darstellungsbereich 6 wechselt. Dieser Wechsel des ausgewählten Darstellungsbereiches wird in der Figur 2b durch eine Pfeil 62 symbolisiert, welcher von dem fünften Darstellungsbereich 5 zu dem sechsten Darstellungsbereich 6 hinzeigt. Zu einem dritten Zeitpunkt liegt somit eine Auswahl des sechsten Darstellungsbereiches 6 vor. Diese Auswahl des sechsten Darstellungsbereiches 6 wird gemäß des Ausführungsbeispieles durch eine Umrandung 33 des sechsten Darstellungsbereichs 6 angezeigt.

Ausgehend von einer Auswahl des sechsten Darstellungsbereiches 6 ist es dem Nutzer nicht möglich, durch eine Richtungsangabe in der Richtung nach oben eine Auswahl hin zu dem dritten Darstellungsbereich 3 zu verändern, da der dritte Darstellungsbereich 3 nicht der ersten Menge von Darstellungsbereichen angehört.

Insbesondere ist es möglich, durch eine Richtungsangabe in der Richtung nach unten eine Auswahl des neunten Darstellungsbereiches 9 zu einem vierten Zeitpunkt beizuführen. Der Wechsel von einer Auswahl des sechsten Darstellungsbereiches 6 hin zu einer Auswahl des neunten Darstellungsbereiches 9 wird gemäß Figur 2b durch einen Pfeil 63 symbolisert, welcher von dem sechsten Darstellungsbereich 6 hin zu dem neunten Darstellungsbereich 9 zeigt. Eine Auswahl des neunten Darstellungsbereich 9 zum vierten Zeitpunkt wird durch eine Umrandung 34 des neunten Darstellungsbereiches 9 angezeigt. Die Umrandungen 31, 32, 33, 34 der auswählbaren Darstellungsbereiche 2, 5, 6, 9 aus der ersten Menge von Darstellungsbereichen werden jeweils nur zu den Zeitpunkten angezeigt, zu welchen ein entsprechender Darstellungsbereich 2, 5, 6, 9 auch ausgewählt ist. Ist also der neunte Darstellungsbereich 9 ausgewählt, so wird die Umrandung 34 als erste grafische Kennzeichnung angezeigt.

Figur 3 zeigt eine zweidimensionale Kartendarstellung 100, welche alle Darstellungselemente beinhaltet wie bereits gemäß Figur 1 erläutert.

Ferner weist Figur 3 eine zweite grafische Kennzeichnung von Darstellungsbereichen der ersten Menge derart auf, dass Darstellungsbereiche der ersten Menge unterschiedlich zu Darstellungsbereichen der zweiten Menge angezeigt werden. Gemäß des Ausführungsbeispieles in Figur 3 weist die zweidimensionale Kartendarstellung 100 zusätzlich zu den Darstellungselementen der Figur 1 eine zweite grafische Kennzeichnung des zweiten Darstellungsbereiches 2, des fünften Darstellungsbereiches 5, des sechsten Darstellungsbereiches 6 sowie des neunten Darstellungsbereiches 9 auf. Die zweite grafische Kennzeichnung der Darstellungsbereiche 2, 5, 6, 9 der ersten Menge erfolgt gemäß des Ausführungsbeispieles in Figur 3 anhand einer gestrichelten Umrandung 41, 42, 43, 44 der jeweiligen Darstellungsbereiche 2, 5, 6, 9 der ersten Menge. Anhand dieser zweiten grafischen Kennzeichnung erhält der Nutzer einen grafischen Hinweise darauf, welche Darstellungsbereiche durch ihn auswählbar sind. Die zweite grafische Kennzeichnung der auswählbaren Darstellungsbereiche kann durch unterschiedliche grafische Kennzeichnungen erfolgen. Derartige zweite grafische Kennzeichnungen erfolgen vorteilhafter Weise anhand einer Umrandung von Darstellungsbereichen der ersten Menge. Insbesondere erfolgt eine zweite grafische Kennzeichnung von Darstellungsbereichen der ersten Menge durch eine Anzeige mit stärkerer Helligkeit als dies für Darstellungsbereiche der zweiten Menge erfolgt. Ebenso kann zum Zwecke einer zweiten grafischen Kennzeichnung auf eine Variation eines Kontrastes oder einer Farbintensität zurückgegriffen werden.

Die erste grafische Kennzeichnung eines ausgewählten Darstellungsbereiches sowie die zweite grafische Kennzeichnung von Darstellungsbereichen der ersten Menge schließen sich nicht gegenseitig aus. Vorzugsweise ist es möglich, zusätzlich zu der zweiten grafischen Kennzeichnung gemäß des Ausführungsbeispieles in Figur 3 bei Auswahl des zweiten Darstellungsbereiches 2 diese Auswahl durch eine zusätzliche Umrandung 31 des zweiten Darstellungsbereiches 2 wie in Figur 2a dargestellt vorzunehmen.

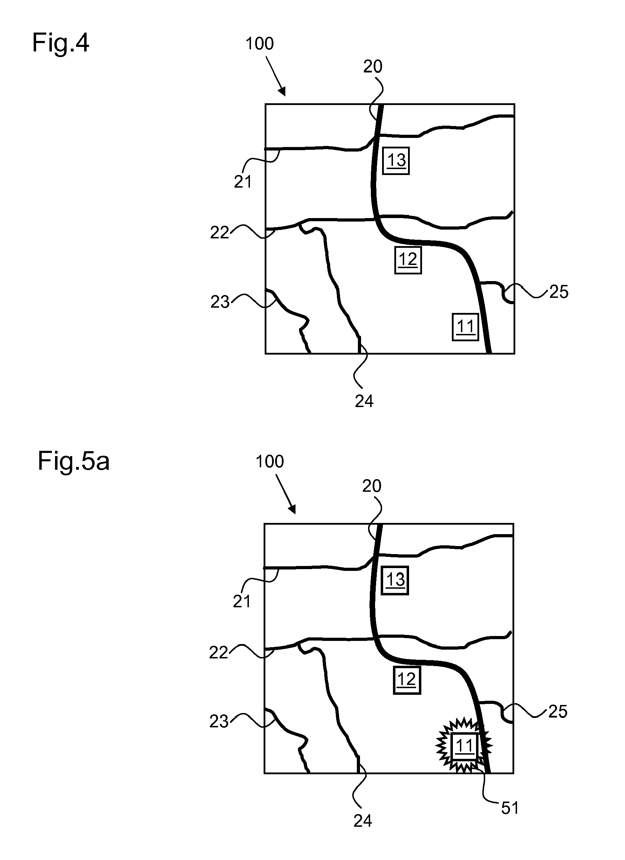

Vorzugsweise handelt es sich bei Darstellungsbereichen der ersten Menge um Darstellungsbereiche, anhand derer ein Symbol entlang der Fahrtroute 20 dargestellt wird. Ein Ausführungsbeispiel hierzu zeigt Figur 4. Gemäß des Ausführungsbeispieles in Figur 4 weist die zweidimensionale Kartendarstellung 100 die Fahrtroute 20 sowie die erste bis die fünfte Wegeroute 21, ..., 25 auf, welche bereits gemäß Figur 1 beschrieben sind. Die zweidimensionale Kartendarstellung 100 weist ferner ein erstes Symbol 11, ein zweites Symbol 12 sowie ein drittes Symbol 13 auf. Gemäß des Ausführungsbeispieles handelt es sich bei den Symbolen um rechteckförmige Flächen, welche entlang der Fahrtroute 20 angeordnet sind. Eine Darstellung von Symbolen in einer zweidimensionalen Kartendarstellung 100 entlang einer Fahrtroute 20 ist dem Fachmann bekannt.

Gemäß des Ausführungsbeispieles in Figur 4 stellen die Symbole 11 bis 13 die erste Menge von Darstellungsbereichen dar, auf welche in einem Betriebsmodus eine Auswahl durch einen Nutzer beschränkt ist.

Bei den Symbolen 11 bis 13 handelt es sich vorzugsweise um Symbole, welche einen Nutzer auf bestimmte Einrichtungen aufmerksam machen sollen, welche sich entlang der Fahrtroute 20 befinden. Bei solchen Einrichtungen handelt es sich beispielsweise um sogenannte Points of Interest. Ein Point of Interest kann beispielsweise eine Tankstelle, eine Raststation, ein Schnellrestaurant, eine Autobahnabfahrt oder ähnliche Einrichtungen handeln.

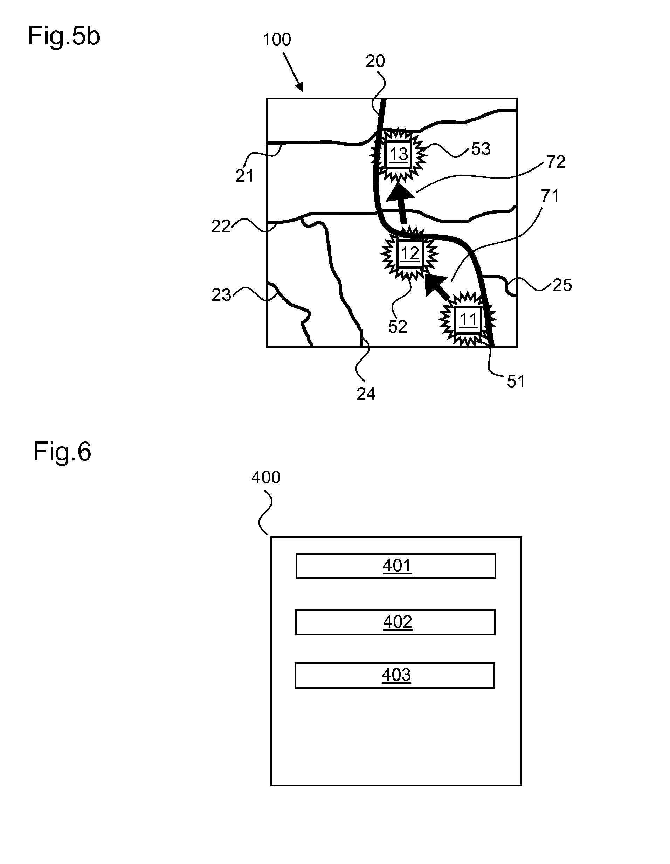

Figur 5a, 5b zeigen ein Ausführungsbeispiel zur Auswahl eines Darstellungsbereiches aus einer zweidimensionalen Kartendarstellung 100, bei welcher es sich bei den Darstellungsbereichen der ersten Menge um Symbole 11, 12, 13 entlang einer Fahrtroute 20 handelt.

Figur 5a zeigt die zweidimensionale Kartendarstellung 100 mit allen Darstellungselementen wie bereits in Figur 4 erläutert. Gemäß des Ausführungsbeispieles in Figur 5a ist zu einem ersten Zeitpunkt das erste Symbol 11 ausgewählt. Die Auswahl des ersten Symbols 11 als ein Darstellungsbereich aus der ersten Menge von Darstellungsbereichen wird durch eine erste grafische Kennzeichnung 51 angezeigt. Bei der ersten grafischen Kennzeichnung 51 handelt es sich beispielsweise um eine Sternenform, welche um das erste Symbol 11 herum verläuft.

Gemäß Figur 5b erfolgte eine Richtungseingabe des Nutzers, aufgrund derer zu einem zweiten Zeitpunkt die Auswahl von dem ersten Symbol 11 zu dem zweiten Symbol 12 hin wechselt. Dieser Wechsel des Darstellungsbereiches aus der ersten Menge wird anhand eines Pfeils 71 in der Figur 5b symbolisiert, welcher von dem ersten Symbol 11 zu dem zwölften Symbol 12 hinzeigt. Zu dem zweiten Zeitpunkt wechselt somit gemäß des Ausführungsbeispieles die zweite grafische Kennzeichnung von der grafischen Kennzeichnung 41 des ersten Symbols hin zu der grafischen Kennzeichnung 42 des zweiten Symbols 12. Zu einem zweiten Punkt ist somit das zweite Symbol 12 ausgewählt. Aufgrund einer weiteren Richtungseingabe des Nutzers erfolgt ein Wechsel der Auswahl eines Darstellungsbereiches aus der ersten Menge von dem zweiten Symbol 12 hin zu dem dritten Symbol 13. Zu dem dritten Zeitpunkt ist gemäß des Ausführungsbeispieles das dritte Symbol 13 ausgewählt, welches durch eine zweite grafische Kennzeichnung 43 in Sternenform um das dritte Symbol 13 herum angezeigt wird. Der Wechsel der Auswahl von dem zweiten Symbol 12 hin zu dem dritten Symbol 13 wird in Figur 5b durch einen Pfeil 72 von dem zweiten Symbol 12 hin zu dem dritten Symbol 13 symbolisert.

Vorzugsweise erfolgt eine Richtungsangabe zur Auswahl eines Darstellungsbereiches durch den Nutzer anhand einer der Richtungen unten, oben, rechts und/oder links. Eine solche Richtungsangabe erfolgt vorzugsweise durch eine Kreuzwippe, ein Tastenfeld, einen Trackball oder einen Joystick.

Die durch den Nutzer vorgenommene Richtungsangabe ist nicht notwendigerweise auf eine der oben erwähnten Richtungsangaben beschränkt. Vorzugsweise erfolgt eine Auswahl eines Darstellungsbereiches anhand eines Cursors, welcher mittels eines der zuvor erwähnten Eingabemittel über die Anzeige der zweidimensionalen Kartendarstellung bewegt wird, so dass durch eine Betätigung einer Taste oder eines Knopfes eine Auswahl eines Darstellungsbereiches vorgenommen wird, auf welcher der Cursor zeigt.

Insbesondere ist es vorgesehen, dass der Nutzer durch eine Eingabe eine Bestätigung der Auswahl eines Darstellungsbereiches vornimmt, und dass aufgrund der Bestätigung dem Nutzer Informationen angezeigt werden, welche mit dem ausgewählten Darstellungsbereich verknüpft sind.

Gemäß des Ausführungsbeispieles in Figur 6 erfolgt eine Darstellung von Informationen 400, welche mit einem Symbol verknüpft sind. Ist beispielsweise gemäß des Ausführungsbeispieles in Figur 5a das erste Symbol 11 ausgewählt und nimmt der Nutzer durch eine Eingabe eine Bestätigung der Auswahl des Symbols 11 als ein Darstellungsbereich der ersten Menge vor, so werden dem Nutzer gemäß des Ausführungsbeispieles Informationen 400 angezeigt. Eine Darstellung von Informationen 400 erfolgt beispielsweise in Form von drei Textfeldern 401, 402, 403, welche beispielsweise untereinander liegen. In derartigen Textfeldern 401 bis 403 ist es möglich, Angaben zu einer Einrichtung dem Nutzer anzuzeigen, wie beispielsweise eine Adresse einer Einrichtung, Preisangaben, eine Telefonnummer oder weitere Informationen.

Vorzugsweise nimmt der Nutzer durch eine Eingabe eine Bestätigung der Auswahl eines Darstellungsbereiches vor, so dass dem Nutzer Informationen angezeigt werden, bei welchen es sich um eine vergrößerte Darstellung des ausgewählten Darstellungsbereiches handelt.

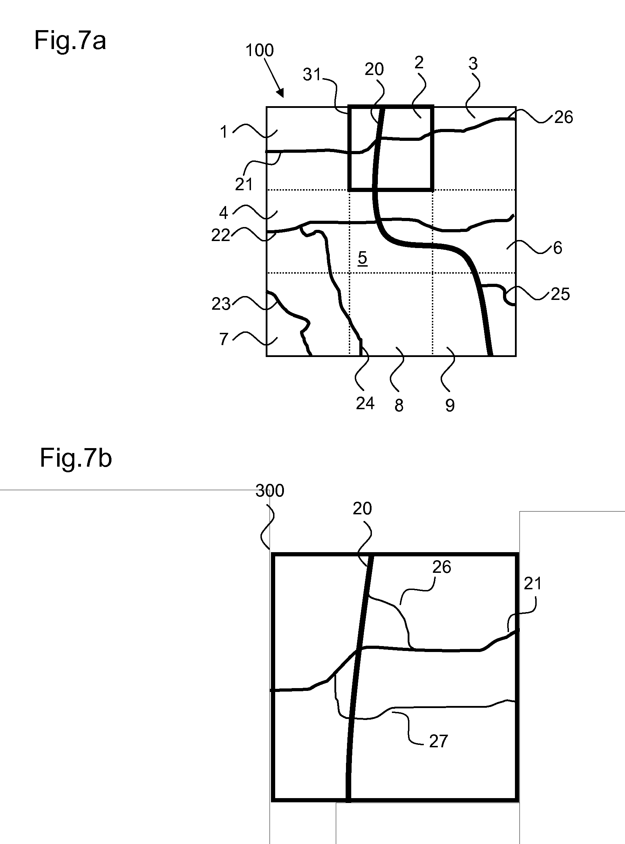

Figur 7a zeigt eine zweidimensionale Kartendarstellung 100, welche sämtliche Darstellungselemente aufweist, wie bereits gemäß Figur 2a erläutert.

Gemäß des Ausführungsbeispiels in Figur 7a ist der zweite Darstellungsbereich 2 ausgewählt und vorzugsweise durch eine erste grafische Kennzeichnung in Form einer Umrandung 31 des zweiten Darstellungsbereiches 2 gekennzeichnet. Durch eine Eingabe bestätigt der Nutzer die Auswahl des ausgewählten Darstellungsbereiches 2. Die Anzeige wechselt aufgrund der Bestätigung von einer Anzeige wie in Figur 7a dargestellt zu einer Anzeige wie in Figur 7b dargestellt. Figur 7b zeigt eine vergrößerte zweidimensionale Kartendarstellung 300, welche eine Vergrößerung des ausgewählten, zweiten Darstellungsbereiches 2 repräsentiert. Die vergrößerte zweidimensionale Kartendarstellung 300 weist die Fahrtroute 20 sowie die erste Wegeroute 21 auf. Aufgrund der vergrößerten zweidimensionalen Kartendarstellung 300 des ausgewählten Darstellungsbereiches 2 werden vorzugsweise weitere Wegerouten in der zweidimensionalen Kartendarstellung 300 dargestellt, welche gemäß Figur 7a nicht dargestellt wurden. Bei diesen weiteren Wegerouten handelt es sich beispielsweise um Wegerouten, welche eine geringere Straßenbreite als die Fahrtroute 20 und die erste Wegeroute 21 aufweisen. Gemäß Figur 7b beinhaltet die vergrößerte zweidimensionale Kartendarstellung 300 eine sechste Wegeroute 26, welche eine Verbindung der Fahrtroute 20 und der ersten Wegeroute 21 darstellt, sowie eine siebte Wegeroute 27, welche von der ersten Wegeroute 21 abzweigt und darauf folgend die zweite Wegeroute 20 kreuzt. Anhand einer vergrößerten zweidimensionalen Kartendarstellung 300 eines ausgewählten Darstellungsbereiches 2 ist es vorzugsweise möglich, dem Nutzer zusätzliche Details einer Kartendarstellung anzuzeigen.

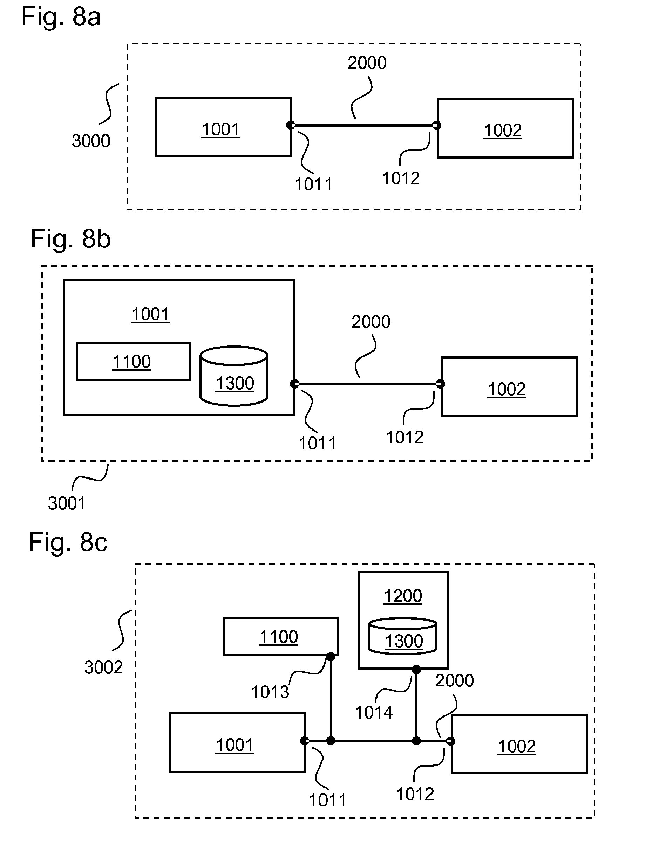

Figur 8a, 8b, 8c zeigen Ausführungsformen der erfindungsgemäßen Fahrerinformationseinrichtung.

Gemäß des Ausführungsbeispieles in Figur 8a weist die Fahrerinformationseinrichtung 3000 eine Anzeigeeinheit 1001 auf, welche über eine erste Schnittstelle 1011 mit einem Datenbus 2000 verbunden ist. Ferner weist die Fahrerinformationseinrichtung 3000 eine Bedieneinheit 1002 auf, welche über eine zweite Schnittstelle 1012 ebenfalls mit dem Datenbus 2000 verbunden ist. Die Anzeigeeinheit 1001 zeigt eine zweidimensionalen Kartendarstellung derart an, dass die zweidimensionale Kartendarstellung in Darstellungsbereich unterteilt ist. Die Anzeigeinheit teilt die Darstellungsbereiche in Abhängigkeit von der Fahrtroute in eine erste Menge und eine zweite Menge von Darstellungsbereichen auf. Anhand der Bedieneinrichtung 1002 wählt der Nutzer einen Darstellungsbereich aus der zweidimensionalen Kartendarstellung aus. In einem Betriebsmodus ist die Auswahl eines Darstellungsbereiches durch den Nutzer auf eine Auswahl aus der ersten Menge von Darstellungsbereichen beschränkt.

Vorzugsweise weist die Bedieneinrichtung 1002 eine Kreuzwippe, ein Tastenfeld, einen Trackball oder einen Joystick auf. Anhand dieser Bedienelemente wählt der Nutzer Darstellungsbereiche aus. Ferner verwendet der Nutzer diese Bedienelemente vorzugsweise, um Eingaben vorzunehmen.

In Figur 8b ist ein weiteres Ausführungsbeispiel der Fahrerinformationseinrichtung 3002 dargestellt. Diese weist die Anzeigeeinheit 1001, eine Recheneinheit 1100 sowie Kartendaten 1300 auf. Die Kartendaten 1300 sind vorzugsweise in einer Speichereinheit gespeichert. Gemäß des Ausführungsbeispieles in Figur 8b erstellt die Anzeigeeinheit 1001 unter Verwendung der Recheneinheit 1100 sowie der Kartendaten 1300 eine zweidimensionale Kartendarstellung. Voraussetzung hierfür ist, dass bereits eine Fahrtroute feststeht. Eine Bestimmung einer Fahrtroute in Abhängigkeit einer Eingabe eines Nutzers ist dem Fachmann bekannt.

In Figur 8c ist ein weiteres Ausführungsbeispiel der Fahrerinformationseinrichtung 3003 dargestellt.
Gemäß des Ausführungsbeispieles ist die Recheneinheit 1100 als eine separate Einheit ausgebildet, welche über eine dritte Schnittstelle 1013 an dem Datenbus 2000 angeschlossen ist. Ferner weist das Ausführungsbeispiel in Figur 8c eine separate Speichereinheit 1200 auf, in welcher die Kartendaten 1300 abgespeichert sind. Die separate Speichereinheit 1200 ist über eine vierte Schnittstelle 1014 mit dem Datenbus 2000 verbunden. Über den Datenbus 2000 kommunizieren die erwähnten Einheiten mit der Anzeigeeinheit 1001 sowie der Bedieneinheit 1002.

Die Fahrerinformationseinrichtung ist ausgebildet zur Durchführung einer der Verfahren, welche bezüglich einer Auswahl eines Darstellungsbereiches einer zweidimensionalen Kartendarstellung beschrieben sind.

## Patentansprüche

1. Verfahren zur Auswahl eines Darstellungsbereiches (1, ..., 9, 11, 12, 13) aus einer zweidimensionalen Kartendarstellung (100), wobei in der Kartendarstellung (100) eine Fahrtroute (20) dargestellt wird, wobei die zweidimensionale Kartendarstellung (100) in Darstellungsbereiche (1, ..., 9, 11, 12, 13) unterteilt wird, wobei die Darstellungsbereiche (1, ..., 9, 11, 12, 13) in Abhängigkeit von der Fahrtroute (20) in eine erste Menge und in eine zweite Menge von Darstellungsbereichen (1, ..., 9, 11, 12, 13) aufgeteilt werden, **dadurch gekennzeichnet, dass** in einem Betriebsmodus eine Auswahl eines Darstellungsbereiches (1, ..., 9, 11, 12, 13) durch einen Nutzer auf eine Auswahl aus der ersten Menge von Darstellungsbereichen (2, 5, 6, 9, 11, 12, 13) beschränkt ist.

2. Verfahren nach Anspruch 1, **dadurch gekennzeichnet, dass** es sich bei der Unterteilung der zweidimensionalen Kartendarstellung (100) in Darstellungsbereiche (1, ..., 9, 11, 12, 13) um eine Kachelung handelt.

3. Verfahren nach einem der vorhergehenden Ansprüche, **dadurch gekennzeichnet, dass** die Auswahl eines Darstellungsbereiches (1, ..., 9, 11, 12, 13) dem Nutzer durch eine erste grafische Kennzeichnung (31, 32, 33, 51, 52, 53) angezeigt wird.

4. Verfahren nach Anspruch 3, **dadurch gekennzeichnet, dass** es sich bei Darstellungsbereichen (2, 5, 6, 9) der ersten Menge um Darstellungsbereiche (2, 5, 6, 9) handelt, welche eine Darstellung der Fahrtroute (20) beinhalten.

5. Verfahren nach Anspruch 3, **dadurch gekennzeichnet, dass** es sich bei Darstellungsbereichen (11, 12, 13) der ersten Menge um Darstellungsbereiche (11, 12, 13) handelt, anhand derer ein Symbol (11, 12, 13) entlang der Fahrtroute (20) dargestellt wird.

6. Verfahren nach einem der vorhergehenden Ansprüche, **dadurch gekennzeichnet, dass** die Auswahl durch den Nutzer anhand einer Richtungsangabe in einer der Richtungen unten, oben, rechts, und links erfolgt.

7. Verfahren nach einem der vorhergehenden Ansprüche, **dadurch gekennzeichnet, dass** Darstellungsbereiche (2, 5, 6, 9, 11, 12, 13) der ersten Menge durch eine zweite grafische Kennzeichnung (41, 42, 43, 44) unterschiedlich zu Darstellungsbereichen (1, 3, 4, 7, 8) der zweiten Menge angezeigt werden.

8. Verfahren nach einem der vorhergehenden Ansprüche, **dadurch gekennzeichnet, dass** der Nutzer durch eine Eingabe eine Bestätigung der Auswahl eines Darstellungsbereiches (1, ..., 9, 11, 12, 13) vornimmt, und dass aufgrund der Bestätigung dem Nutzer Informationen (400, 300) angezeigt werden, welche mit dem ausgewählten Darstellungsbereich (2, 11) verknüpft sind.

9. Verfahren nach Anspruch 8, **dadurch gekennzeichnet, dass** es sich bei den Informationen (300) um eine vergrößerte Darstellung des ausgewählten Darstellungsbereiches (2) handelt.

10. Fahrerinformationseinrichtung (3000, 3001, 3002) aufweisend eine Anzeigeeinheit (1001), welche eine Anzeige einer zweidimensionalen Kartendarstellung (100) derart vornimmt, dass die zweidimensionale Kartendarstellung (1000) in Darstellungsbereiche (1, ..., 9, 11, 12, 13) unterteilt ist, wobei die Anzeigeeinheit (1001) die Darstellungsbereiche (1, ..., 9, 11, 12, 13) in Abhängigkeit von der Fahrtroute (20) in eine erste Menge und in eine zweite Menge von Darstellungsbereichen (1, ..., 9, 11, 12, 13) aufteilt, eine Bedieneinrichtung (1002) zur Auswahl eines Darstellungsbereiches (1, ..., 9, 11, 12, 13) aus der zweidimensionalen Kartendarstellung (100) durch einen Nutzer, wobei die Anzeigeeinheit (1001) eine erste Schnittstelle (1011) aufweist, über welche sie an einen Datenbus (2000) angeschlossen ist, wobei die Bedieneinheit (1002) eine zweite Schnittstelle (1002) aufweist, über welche sie an den Datenbus (2000) angeschlossen ist, **dadurch gekennzeichnet, dass** in einem Betriebsmodus die Auswahl eines Darstellungsbereiches (1, ..., 9, 11, 12, 13) durch den Nutzer auf eine Auswahl aus der ersten Menge von Darstellungsbereichen (2, 5, 6, 9, 11, 12, 13) beschränkt ist.

11. Fahrerinformationseinrichtung (3000, 3001, 3002) nach Anspruch 10,
**dadurch gekennzeichnet, dass** die Bedieneinrichtung (1002) eine Kreuzwippe, ein Tastenfeld, einen Trackballs oder einen Joysticks aufweist.
